# EUROPÄISCHE PATENTSCHRIFT

(11) **EP 0 588 880 B1**
(45) Veröffentlichungstag und Bekanntmachung des Hinweises auf die Patenterteilung: **15.05.1996**
(21) Anmeldenummer: 92912080.6
(22) Anmeldetag: 17.06.1992
(51) Int. Cl.: B60S 1/34

(54) **SCHEIBENWISCHERANLAGE**
WINDSCREEN-WIPER SYSTEM
SYSTEME D'ESSUIE-GLACE

(30) Priorität: 18.06.1991 AT 1223/91
(43) Veröffentlichungstag der Anmeldung: 30.03.1994
(73) Patentinhaber: BATTLOGG, Stefan, A-6771 St. Anton im Montafon (AT)
(72) Erfinder: BATTLOGG, Stefan, A-6771 St. Anton im Montafon (AT)
(74) Vertreter: Torggler, Paul, Dr.
(86) Internationale Anmeldenummer: AT9200078
(87) Internationale Veröffentlichungsnummer: WO9222443

(56) Entgegenhaltungen:
- WO-A-90/11209
- AU-B- 201 838
- DE-A- 4 028 494
- US-A- 3 480 985
- US-A- 4 318 201
- PATENT ABSTRACTS OF JAPAN vol. 12, no. 57 (M-670) (2904) 20 February 1988 & JP-A-62 205 843 ( NIPPON DENSO ) 10 September 1987
- PATENT ABSRACTS OF JAPAN vol. 13, no. 573 (M-909)(3921) 19 December 1989 & JP-A-1 240 347 ( MAZDA ) 25 September 1989

## Beschreibung

Die Erfindung betrifft eine Scheibenwischeranlage, insbesondere für Personenkraftwagen, mit mindestens einem einen Schwenkantrieb aufweisenden, zur Fahrzeugscheibe hin beaufschlagten Wischerarm, der einen ersten Wischerarmteil und einen im ersten Wischerarmteil teleskopisch ausschiebbaren, zweiten Wischerarmteil aufweist, an dessen freiem Ende ein Wischerblatt angeordnet ist, wobei der erste Wischerarmteil mit einem auf dem Schwenklager verschwenkbar angeordneten Grundkörper des Wischerarmes beweglich verbunden ist und wobei während der Schwenkbewegung des Wischerarmes die den Wischerarm beaufschlagende Anpreßkraft veränderbar ist.

Eine einarmige Scheibenwischeranlage dieser Art ist beispielsweise der WO-A-90/11209 zu entnehmen. Der Wischerarm ist dort an einem auf dem Schwenklager verschwenkbaren Grundkörper um eine Querachse beweglich gelagert und von einer Zugfeder beaufschlagt, die am Schwenklager exzentrisch eingehängt ist. Dies führt zu einer generellen Erhöhung der Federspannung mit zunehmendem Schwenkwinkel des Wischerarmes, erlaubt aber keine differenzierte Änderung der Anpreßkraft.

Aus der AU-B-201,838 ist weiters eine Scheibenwischeranlage bekannt, in der während der Schwenkbewegung die den einteiligen, nicht verlängerbaren Wischerarm beaufschlagende Anpreßkraft trotz Scheibenkrümmung dadurch etwa gleich gehalten ist, daß ein mit dem Wischerarm verbundenes, winkelartiges Abtastelement eine gleichartig gekrümmte schwenklagerfeste Führungsbahn untergreift.

Die Erfindung hat es sich nun zur Aufgabe gestellt, bei einer Scheibenwischeranlage der eingangs genannten Art die schwenkwinkelabhängige Federspannung so zu variieren, daß die in jeder Wischerarmstellung benötigte Größe der Anpreßkraft gegeben ist.

Erfindungsgemäß wird dies dadurch erreicht, daß am Schwenklager des Wischerarmes eine Steuerkurve ausgebildet ist, entlang der ein federbeaufschlagtes, die Anpreßkraft veränderndes Abtastelement des Wischerarmes geführt ist, das in einer ersten Ausführung durch eine vom ersten Wischerarmteil abstehende, federnde Zunge, und in einer zweiten Ausführung durch einen von einer Feder an die Steuerkurve angedrückten, im Grundkörper des Wischerarmes gelagerten Stift gebildet ist.

Da die Steuerkurve in beliebiger Weise gestaltbar ist, kann durch geeignete Wahl der Steuerkurve, beispielsweise durch Austausch des die Steuerkurve tragenden Teiles des Schwenklagers, die Anpreßkraft ohne zusätzlichen Stellantrieb auf die gewünschte bzw. benötigte Größe, auf die Größe und Krümmung der Windschutzscheibe usw. eingestellt werden. Besonders vorteilhaft ist dabei, daß die Anpreßkraft durch eine geeignete Ausbildung der Steuerkurve kurz vor den Umkehrbereichen des Wischerarmes stark erhöht und in den Umkehrbereichen reduziert werden kann.

In der ersten Ausführung mit federnder Zunge weist der erste Wischerarmteil bevorzugte zwei Längsschlitze auf, zwischen denen die Zunge vorgesehen ist, und die beiden außerhalb der Längsschlitze gebildeten Seitenteile sind mit dem Grundkörper beweglich verbunden.

Ebenso können aber auch die Seitenteile die Zunge bilden und der Mittelbereich vom Grundkörper abstehen. Wird die federnde Zunge an der Unterseite des Wischerarmteiles außerhalb des Grundkörpers befestigt, so liegt der Angriffspunkt der von der federnden Zunge erzeugten Kraft außerhalb des Grundkörpers in einem relativ großen Abstand zur Schwenkachse.

Die federnde Zunge kann das Befestigungsende der Seitenteile am Grundkörper zum Schwenklager hin überragen.

In der zweiten Ausführung mit dem an die Steuerkurve angedrückten Stift ist die Feder insbesondere als Schraubenfeder ausgebildet, die auf Druck beansprucht wird. Die Steuerkurve kann an einem Umfangsschlitz des Schwenklagers ausgebildet sein und weist Krümmungsachsen auf, die parallel zur Schwenkachse liegen. Zur Verringerung der Reibung kann weiters vorgesehen sein, daß das Abtastelement ein an der Steuerkurve anliegendes Wälzelement aufweist.

In einer bevorzugten Ausführung ist vorgesehen, daß der erste Wischerarmteil einstückig mit dem Grundkörper ausgebildet ist und die bewegliche Verbindung aus einer Sollbiegestelle besteht, die am Ansatz des Wischerarmteiles am Grundkörper vorgesehen ist. In der einstückigen Ausführung besteht der erste Wischerarmteil insbesondere aus einem faserverstärkten Kunststoff.

In einer weiteren Ausführung kann der erste Wischerarmteil durch eine mit dem Grundkörper verbundene Blattfeder gebildet sein, der das Abtastelement zugeordnet ist. Die Blattfeder erübrigt eine Querachse zwischen dem ersten Wischerarmteil und dem Grundkörper, sodaß ein besonderes einfacher und spielfreier Aufbau des Wischerarmes erzielt wird. Eine scheibenwischerspezifische Grundeinstellung der Federkraft kann beispielsweise durch Verjüngen des Querschnittes (Einfräsungen oder dergleichen) erzielt werden.

Die federnde Zunge bzw. die den Stift andrückende Schraubenfeder kann eine bestimmte Vorspannung aufweisen, die auf Grund der Führung entlang der Steuerkurve erhöht oder verringert wird. Ist eine maximale Anpreßkraft vorgegeben, wird diese in den Bereichen mit geringerer Anpressung durch eine Gegenkraft verringert. Ebenso kann jedoch eine minimale Anpreßkraft vorgegeben sein, die in den Bereichen höherer Anpressung erhöht wird.

Nachstehend wird nun die Erfindung anhand der Figuren der Zeichnungen näher beschrieben, ohne darauf beschränkt zu sein.

Es zeigen:
- Fig. 1: die Draufsicht auf eine Windschutzscheibe mit einem im wesentlichen vollflächig quer über die Scheibe führbaren Wischerblatt sowie die den verschiedenen Wischerblattpositionen zugeordneten Größen der Anpreßkraft,
- Fig. 2: eine Ansicht des im Schwenklager angeordneten Grundkörpers des Wischerarmes mit einer ersten Ausführung der Steuerkurve,
- Fig. 3: eine Draufsicht auf den Befestigungsbereich des Wischerarmes auf dem Grundkörper,
- Fig. 4: einen Schnitt nach der Linie IV-IV der Fig. 3,
- Fig. 5 bis 7: je einen Schnitt ähnlich Fig. 4 durch drei weitere Ausführungsformen,
- Fig. 8: eine Ansicht gemäß Fig. 2 mit einer zweiten Ausführung der Steuerkurve und
- Fig. 9: einen Schnitt ähnlich Fig. 4 durch eine weitere Ausführungsform.

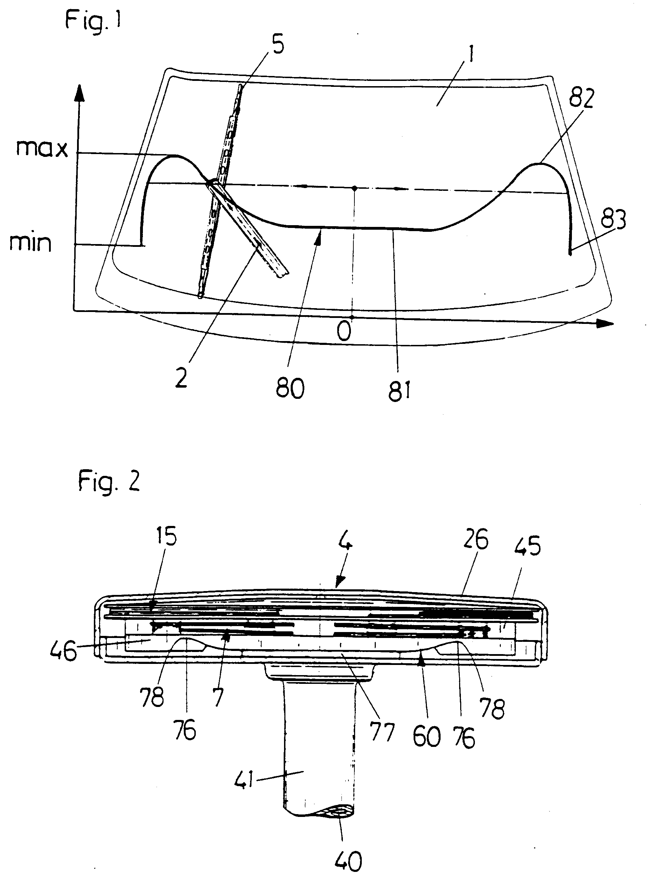

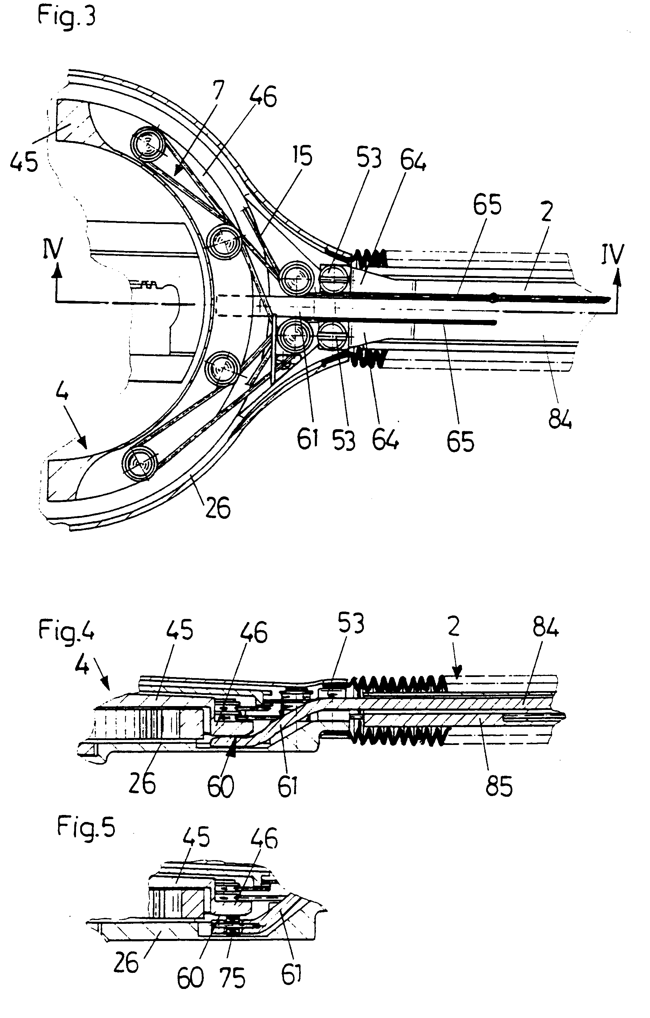

In Fig. 1 ist eine Windschutzscheibe 1 mit einer Einarmscheibenwischeranlage dargestellt, die einen Wischerarm 2 aufweist, der aus teleskopisch ausschiebbaren Wischerarmteilen 84,85 gebildet ist. Der ausschiebbare Wischerarmteil 85 trägt am freien Ende verdrehbar das Wischerblatt 5, das durch nicht näher erläuterte Seilzüge 7,15 (Fig. 2,3) während der Wischbewegung des schwenkenden Wischerarmes 2 im wesentlichen parallel über die Scheibe 1 geführt wird und diese annähernd vollflächig überstreicht. Ausgehend von einer mittleren Position verschwenkt der Wischerarm nach links und rechts, wobei der Wischerarmteil 85 ausgeschoben wird. Allein die Verlängerung des Wischerarmes verringert ohne zusätzliche Maßnahmen bereits die Anpreßkraft, mit der das Wischerblatt 5 zur Scheibe 1 hin beaufschlagt ist.

Hiezu kommt noch die üblicherweise gegebene Krümmung der Scheibe 1 zu den Seitenrändern hin, durch die die Anpreßkraft nochmals verringert wird. Die Anpreßkraft sollte jedoch, um eine annähernd gleichbleibende Wischqualität zu bewirken, und ein strömungsbedingtes Abheben des Wischerblattes 5 zu vermeiden, zumindest vor dem Ende des Schwenkweges erhöht werden, und dann im Umkehrbereich am Ende des Schwenkweges gering sein, um den sich umlegenden Wischergummi zu entlasten. Eine optimierte Anpreßkraftkurve ist in Fig. 1 mit 80 bezeichnet. Sie weist im Mittelbereich eine relativ geringe Größe 81 auf, steigt zu den Seitenrändern hin jeweils zu einem Maximum 82 an und fällt im letzten Abschnitt, in dem die Wischergummiumkehr erfolgt, auf ein Minimum 83 ab, das tiefer als der mittlere Bereich geringer Größe 81 liegt.

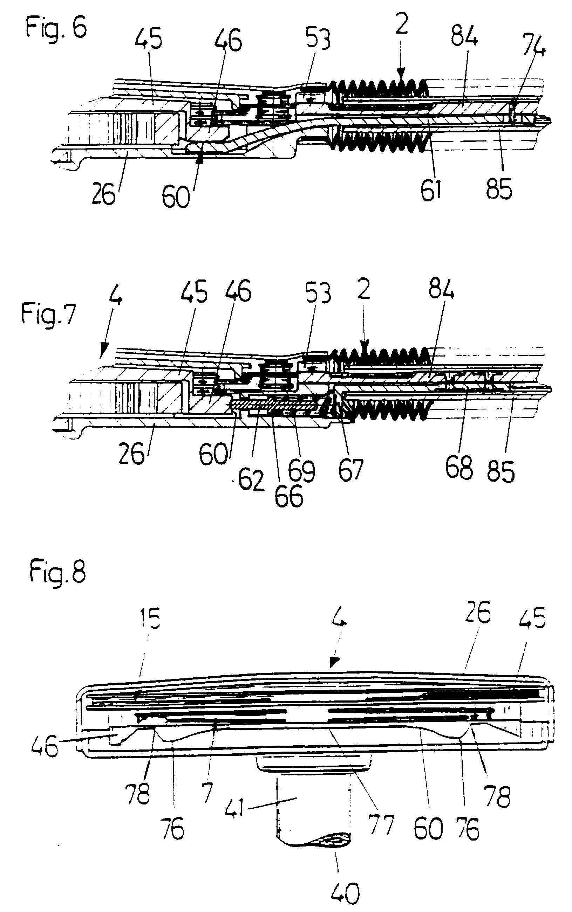

Die an die optimierte Anpreßkraftkurve 80 angepaßte Anpreßkraft kann nun in konstruktiv sehr einfacher Weise durch die Beeinflussung der Spannung der die Anpreßkraft bewirkenden Wischerarmfeder zumindest im Endbereich des Schwenkweges mittels einer Steuerkurve 60 erzielt werden, die am Schwenklager 4 ausgebildet und in Fig. 2 und Fig. 8 ersichtlich ist.

Der Scheibenwischer weist einen auf einem Lagerzapfen 40 verschwenkbar angeordneten und über eine Hohlwelle 41 angetriebenen Grundkörper 26 auf, der zum Antrieb der hier nicht interessierenden Seilzüge 7,15 ein Getriebe enthält, und an dem der Wischerarm 2 bzw. der Wischerarmteil 84 mittels Schrauben 53 fixiert ist. Der Wischerarmteil 84 ist in den Ausführungen nach den Fig. 3 bis 6 und 9 durch eine aus Metall oder faserverstärktem Kunststoff bestehende Blattfeder gebildet, die eine Querachse für die Bewegung des Wischerarmes senkrecht zur Scheibe 1 erübrigt und als Tragschiene für den ausschiebbaren Wischerarmteil 85 dient. Das untere Ende der Blattfeder weist in den Ausführungen nach Fig. 3 bis 6 und 9 parallele, zum Schwenklager 4 hin offene Längsschlitze 65 auf, durch die der Befestigungsbereich bzw. Ansatzbereich in eine mittlere federnde Zunge 61 und Seitenteile 64 unterteilt ist.

Nach Fig. 3 bis 6 stellt der Wischerarmteil 84 einen vom Grundkörper getrennten Teil dar, dessen Befestigung mittels Schrauben 53 am Grundkörper 26 erfolgt. Die federnde Zunge 61 ist nach unten ausgebogen und überragt die Seitenteile 64, wobei das Ende der federnden Zunge 61 einen mit dem Lagerzapfen 40 verdrehfest verbundenen Teil 45 des Schwenklagers 4 untergreift, in dessen Randbereich 46 an der Unterseite die Steuerkurve 60 ausgebildet ist. Deren Krümmungsachsen liegen somit in verschiedenen Höhen senkrecht zur Schwenkachse. Die den Wischerarmteil 84 bildende Blattfeder weist eine hohe Vorspannung auf, sodaß das Wischerblatt 5 in der mittleren Position des Wischerarmes (Fig.3) mit der relativ geringen Größe 81 der Anpreßkraft gegen die Scheibe 1 gedrückt wird, da die federnde Zunge 61 am Mittelteil 77 der Steuerkurve 60 anliegt, in dem sie eine relativ hohe Gegenkraft erzeugt, die die Anpreßkraft reduziert. Wird nun der Wischerarm verschwenkt, so gleitet die federnde Zunge 61 an der Steuerkurve 60 zuerst langsam, dann rascher bis in den höchsten Bereich 76, wodurch die Gegenkraft der Zunge 61 verringert wird, sodaß die Anpreßkraft ihr Maximum 82 erreicht. Bei der Verschwenkung bis in die Umkehrposition wird die federnde Zunge 61 bis zum Ende 78 der Steuerkurve 60 herunter bewegt, sodaß die Zunge 61 der Blattfeder maximal entgegenwirkt und die Anpreßkraft auf ihr Minimum 83 reduziert wird. Der Mittelteil 77 und die beiden Enden 78 der Steuerkurve 60 können dabei in derselben Höhe liegen, da in der Umkehrposition aufgrund des ausgeschobenen Wischerarmteiles 85 die Anpreßkraft ohnedies geringer ist. Zur Verringerung der Reibung kann an der federnden Zunge 61 ein Wälzlager 75 sein, wie aus Fig. 5 ersichtlich ist, gegebenenfalls auch eine reibungsmindernde Beschichtung vorgesehen sein.

In der Ausführung nach Fig. 6 ist die federnde Zunge 61 nicht aus dem Endteil der Blattfeder ausgestanzt, sondern an dieser in beliebiger Weise befestigt (Element 74). Die Blattfeder weist somit keine Längsschlitze auf und der Angriffspunkt der federnden Zunge 61 am Wischerarm ist vom Schwenklager 4 weiter entfernt. Dies ermöglicht unterschiedliche Bemessungen der Blattfeder, sowie der federnden Zunge 61.

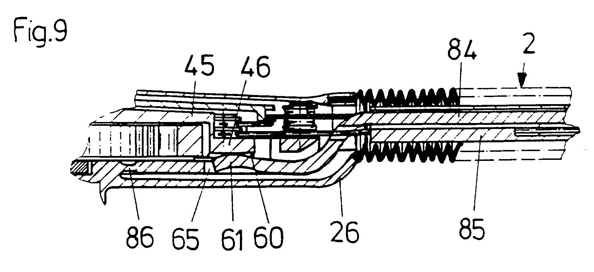

In der Ausführung nach Fig. 9 ist der Wischerarmteil 84 einstückig mit dem Grundkörper 26 ausgebildet, und besteht insbesondere aus dem faserverstärkten Kunststoff. Die bewegliche Verbindung, die gegebenenfalls bereits unter Vorspannung steht, ist in dieser Ausführung durch eine Sollbiegestelle 86, beispielsweise eine Materialverjüngung gebildet, die unterhalb des Schwenklagerteiles 45 vorgesehen ist. Die federnde Zunge 61 ist gemäß Fig. 9 daher nach oben ausgebogen und an die Steuerkurve 60 angedrückt. Aufgrund der einstückigen Ausführung erübrigen sich zusätzliche Verbindungselemente.

Die zur Ausführung nach Fig. 9 gehörende Steuerkurve 60 ist in Fig. 8 gezeigt. Sie verläuft entgegengesetzt zu der nach Fig. 2. Liegt das Abtastelement des Wischerarmes 2 im Mittelteil 77 der Steuerkurve 60, so wird das Wischerblatt 5 mit einer geringen Größe 81 der Anpreßkraft gegen die Scheibe 1 gedrückt. Gleitet das Abtastelement jedoch über die nach unten vorstehenden Bereiche 76, so wird die Anpreßkraft stark erhöht und fällt in den beiden Enden 78 der Steuerkurve 60 auf ihr in den Umkehrpositionen gewünschtes Minimum 83.

Da die Verbindungsstelle oder die Ansatzstelle des Wischerarmteiles 84 am Grundkörper 26 in der Ausführung nach Fig. 9 näher zum Lagerzapfen 40 liegt als die Steuerkurve 60, liegen zur Ausführung nach Fig. 2 bis 7 konträre Kräfteverhältnisse vor, da nicht eine hohe vorgegebene Anpreßkraft durch eine variable Gegenkraft verringert, sondern eine vorgegebene geringe Anpreßkraft durch eine variable Ergänzungskraft erhöht wird.

Fig. 7 zeigt eine Ausführung mit einer Schraubenfeder 69, die zwischen einem ersten Widerlager 66 am Abtastelement und einem zweiten Widerlager 67 am Wischerarmteil 84 angeordnet ist. Gemäß Fig. 7 ist der Wischerarmteil 84 wiederum durch eine Blattfeder gebildet, an der ein abgewinkelter Stützteil 68 befestigt ist, der das zweite Widerlager 67 aufweist. Gegen dieses drückt die Schraubenfeder 69, deren erstes Widerlager 66 als Ringschulter eines als Abtastelement dienenden Stiftes 62 ausgebildet ist. Der Stift 62 drückt gegen die Steuerkurve 60, die in dieser Ausführung am Umfang des Randbereiches 46 des mit dem Lagerzapfen 40 verbundenen Teiles 45 ausgebildet ist und somit zur Schwenkachse parallele Krümmungsachsen aufweist.

In jeder der Ausführungen nach Fig. 6, 7 und 9 kann das Abtastelement 61, 62 mit einem Wälzelement 75 oder einer reibungsmindernden Beschichtung versehen sein.

Wird die federnde Zunge an der Unterseite des Wischerarmteiles außerhalb des Grundkörpers befestigt, so liegt der Angriffspunkt der von der federnden Zunge erzeugten Kraft außerhalb des Grundkörpers in einem relativ großen Abstand zur Schwenkachse.

Die Zunge kann zwischen zwei Längsschlitzen vorgesehen sein, wobei dann die beiden außerhalb der Längsschlitze gebildeten Seitenteile am Grundkörper befestigt sind. Ebenso können aber auch die Seitenteile die Zunge bilden und der Mittelbereich vom Grundkörper abstehen.

## Patentansprüche

1. Scheibenwischeranlage, insbesondere für Personenkraftwagen, mit mindestens einem einen Schwenkantrieb aufweisenden, zur Fahrzeugscheibe (1) hin beaufschlagten Wischerarm (2), der einen ersten Wischerarmteil (84) und einen im ersten Wischerarmteil (84) teleskopisch ausschiebbaren, zweiten Wischerarmteil (85) aufweist, an dessen freiem Ende ein Wischerblatt (5) angeordnet ist, wobei der erste Wischerarmteil (84) mit einem auf dem Schwenklager (4) verschwenkbar angeordneten Grundkörper (26) des Wischerarmes (2) beweglich verbunden ist und wobei während der Schwenkbewegung des Wischerarmes (2) die den Wischerarm (2) beaufschlagende Anpreßkraft veränderbar ist, dadurch gekennzeichnet, daß am Schwenklager (4) des Wischerarmes (2) eine Steuerkurve (60) ausgebildet ist, entlang der ein federbeaufschlagtes, die Anpreßkraft veränderndes Abtastelement geführt ist, das durch eine vom ersten Wischerarmteil (84) abstehende, federnde Zunge (61) gebildet ist.

2. Scheibenwischeranlage nach Anspruch 1, dadurch gekennzeichnet, daß der erste Wischerarmteil (84) zwei Längsschlitze (65) aufweist, zwischen denen die Zunge (61) vorgesehen ist, und die beiden außerhalb der Längsschlitze (65) gebildeten Seitenteile (64) mit dem Grundkörper (26) beweglich verbunden sind.

3. Scheibenwischeranlage nach Anspruch 2, dadurch gekennzeichnet, daß die Zunge (61) das Befestigungsende der Seitenteile (64) am Grundkörper (26) zum Schwenklager (4) hin überragt.

4. Scheibenwischeranlage nach Anspruch 1, dadurch gekennzeichnet, daß die federnde Zunge (61) an der Unterseite des ersten Wischerarmteiles (84) befestigt ist.

5. Scheibenwischeranlage, insbesondere für Personenkraftwagen, mit mindestens einem einen Schwenkantrieb aufweisenden, zur Fahrzeugscheibe (1) hin beaufschlagten Wischerarm (2), der einen ersten Wischerarmteil (84) und einen im ersten Wischerarmteil (84) teleskopisch ausschiebbaren, zweiten Wischerarmteil (85) aufweist, an dessen freiem Ende ein Wischerblatt (5) angeordnet ist, wobei der erste Wischerarmteil (84) mit einem auf dem Schwenklager (4) verschwenkbar angeordneten Grundkörper (26) des Wischerarmes (2) beweglich verbunden ist und wobei während der Schwenkbewegung des Wischerarmes (2) die den Wischerarm (2) beaufschlagende Anpreßkraft veränderbar ist, dadurch gekennzeichnet, daß am Schwenklager (4) des Wischerarmes (2) eine Steuerkurve (60) ausgebildet ist, entlang der ein federbeaufschlagtes, die Anpreßkraft veränderndes Abtastelement geführt ist, das durch einen von einer Feder (69) an die Steuerkurve (60) angedrückten, im Grundkörper (26) des Wischerarms (2) gelagerten Stift (62) gebildet ist.

6. Scheibenwischeranlage nach Anspruch 5, dadurch gekennzeichnet, daß die Feder (69) als Schraubenfeder ausgebildet ist.

7. Scheibenwischeranlage nach Anspruch 1 oder 3, dadurch gekennzeichnet, daß der erste Wischerarmteil (84) einstückig mit dem Grundkörper (26) ausgebildet ist und die bewegliche Verbindung aus einer Sollbiegestelle (86) besteht, die am Ansatz des Wischerarmteiles (84) am Grundkörper (26) vorgesehen ist.

8. Scheibenwischeranlage nach einem der Ansprüche 1 bis 7, dadurch gekennzeichnet, daß der erste Wischerarmteil (84) durch eine mit dem Grundkörper (26) verbundene Blattfeder gebildet ist, der das Abtastelement (61,62) zugeordnet ist.

## Claims

1. Windshield wiper system, in particular for passenger vehicles, with at least one wiper arm (2) biased towards the vehicle windshield (1) and having a pivot drive, said wiper arm comprising a first wiper arm member (84) and a second wiper arm member (85) telescopically slidable in the first wiper arm member (84), with a wiper blade (5) arranged at the free end of said second wiper arm member, the first wiper arm member (84) being movably connected with a basic body (26) of the wiper arm (2) which is pivotally arranged on the pivot bearing (4), and the contact pressure acting on the wiper arm (2) being alterable during the pivoting motion of the wiper arm (2), characterized in that at the pivot bearing (4) of the wiper arm (2) a control curve (60) is formed along which a spring-biased curve follower altering the contact pressure is guided, said curve follower being formed by a springy tongue (61) projecting from the first wiper arm member (84).

2. Windshield wiper system as claimed in claim 1, characterized in that the first wiper arm member (84) has two longitudinal slits (65) between which the tongue (61) is provided, and the two lateral parts (64) formed outside of the longitudinal slits (65) are movably attached to the basic body (26).

3. Windshield wiper system as claimed in claim 2, characterized in that the tongue (61) extends beyond the connecting ends of the lateral parts (64) at the basic body (26) towards the pivot bearing (4).

4. Windshield wiper system as claimed in claim 1, characterized in that the springy tongue (61) is attached at the bottom side of the first wiper arm member (84).

5. Windshield wiper system, in particular for passenger vehicles, with at least one wiper arm (2) biased towards the vehicle windshield (1) and having a pivot drive, said wiper arm comprising a first wiper arm member (84) and a second wiper arm member (85) telescopically slidable in the first wiper arm member (84), with a wiper blade (5) arranged at the free end of said second wiper arm member, the first wiper arm member (84) being movably connected with a basic body (26) of the wiper arm (2) which is pivotally arranged on the pivot bearing (4), and the contact pressure acting on the wiper arm (2) being alterable during the pivoting motion of the wiper arm (2), characterized in that at the pivot bearing (4) of the wiper arm (2) a control curve (60) is formed along which a spring-biased curve follower altering the contact pressure is guided, said curve follower being formed by a pin (62) pushed against the control curve (60) by a spring (69) and mounted in the basic body (26) of the wiper arm (2).

6. Windshield wiper system as claimed in claim 5, characterized in that the spring (69) is a helical spring.

7. Windshield wiper system as claimed in claim 1 or 3, characterized in that the first wiper arm member (84) is formed in one piece with the basic body (26), and the mobile connection is formed as a predetermined bending location (86) provided at the connecting region of the wiper arm member (84) at the basic body (26).

8. Windshield wiper system as claimed in one of claims 1 to 7, characterized in that the first wiper arm member (84) is formed by a leaf spring connected with the basic body (26), the curve follower (61, 62) being associated with said leaf spring.

## Revendications

1. Système d'essuie-glace, en particulier pour voitures particulières, comprenant au moins un bras d'essuie-glace (2) qui comporte un dispositif d'entraînement de pivotement, sollicité en direction du pare-brise (1) du véhicule et comprend une première partie (84) et une deuxième partie (85) qui peut être déplacée de manière télescopique dans la première partie (84) et a' l'extrémité libre de laquelle est disposé un balai d'essuie-glace (5), la première partie (84) du bras d'essuie-glace étant reliée avec possibilité de déplacement à un corps de base (26) du bras d'essuie-glace (2) monté pivotant sur le palier de pivotement (4) et la force de pression qui sollicite le bras d'essuie-glace (2) pendant son mouvement de pivotement pouvant être modifiée, caractérisé en ce qu'il est réalisé sur le palier de pivotement (4) du bras d'essuie-glace (2), une came de commande (60) le long de laquelle est guidé un élément de balayage sollicité par ressort qui fait varier la force de pression et est formé par une languette (61) élastique dépassant de la première partie (84) du bras d'essuie-glace.

2. Système d'essuie-glace selon la revendication 1, caractérisé en ce que la première partie (84) du bras d'essuie-glace comporte deux fentes longitudinales (65) entre lesquelles est prévue la languette (61) et les deux parties latérales (64) formées a l'extérieur des fentes longitudinales (65) sont reliées avec possibilité de déplacement au corps de base (26).

3. Système d'essuie-glace selon la revendication 2, caractérisé en ce que la languette (61) fait saillie par rapport à l'extrémité de fixation des parties latérales (64) sur le corps de base (26) en direction du palier de pivotement (4).

4. Système d'essuie-glace selon la revendication 1, caractérisé en ce que la languette (61) élastique est fixée sur le côté inférieur de la première partie (84) du bras d'essuie-glace.

5. Système d'essuie-glace, en particulier pour voitures particulières, comprenant au moins un bras d'essuie-glace (2) qui comporte un dispositif d'entraînement de pivotement, sollicité en direction du pare-brise (1) du véhicule et comprend une première partie (84) et une deuxième partie (85) pouvant être déplacée de manière télescopique dans la première partie (84), et à l'extrémité libre de laquelle est disposé un balai d'essuie-glace (5), la première partie (84) du bras d'essuie-glace étant reliée avec possibilité de déplacement à un corps de base (26) du bras d'essuie-glace (2) monté pivotant sur le palier de pivotement (4) et la force de pression qui sollicite le bras d'essuie-glace (2) pendant son mouvement de pivotement pouvant être modifiée, caractérisé en ce qu'il est réalisé sur le palier de pivotement (4) du bras d'essuie-glace (2), une came de commande (60) le long de laquelle est guidé un élément de balayage sollicité par ressort qui fait varier la force de pression et est formé par une tige (62) pressée par un ressort (69) contre la came de commande (60) et montée dans le corps de base (26) du bras d'essuie-glace (2).

6. Système d'essuie-glace selon la revendication 5, caractérisé en ce que le ressort (69) est réalisé sous forme de ressort cylindrique.

7. Système d'essuie-glace selon la revendication 1 ou 3, caractérisé en ce que la première partie (84) du bras d'essuie-glace est réalisée d'une seule pièce avec le corps de base (26) et la liaison mobile est constituée par un point destiné à la flexion (86) qui est prévu sur le point de fixation de la partie de bras d'essuie-glace (84) sur le corps de base (26).

8. Système d'essuie-glace selon l'une des revendications 1 à 7, caractérisé en ce que la première partie (84) du bras d'essuie-glace est formée par un ressort à lames qui est relié au corps de base (26) et auquel est associé l'élément de balayage (61, 62).
